# EUROPEAN PATENT APPLICATION

(11) **EP 1 901 157 A2**
(43) Date of publication of application: **19.03.2008**
(21) Application number: 07014908.3
(22) Date of filing: 30.07.2007
(51) Int. Cl.: G06F 3/041

(54) **Apparatus and method for preventing capacitive overlay touchscreen from malfunctioning in TDMA scheme-based mobile terminal**

(30) Priority: 12.09.2006 KR 20060088023
(71) Applicant: Samsung Electronics Co., Ltd., Suwon-si, Gyeonggi-Do (KR)
(72) Inventor: Lee, Byoung-Sun, Suwon-si Gyeonggi-do (KR)
(74) Representative: Lang, Johannes

(57) **Abstract**

An apparatus and method for preventing a capacitive overlay touchscreen from malfunctioning in a mobile terminal using a Time Division Multiple Access (TDMA) scheme are provided. The method includes determining, by checking information on time slots, if transmission of data is generated during a first time slot occupied by the mobile terminal and performing an operation corresponding to an input through the touchscreen for a time interval before the mobile terminal occupies a second time slot if data is not transmitted during the occupied first time slot. Accordingly, the apparatus and method of the present invention prevent malfunctions in capacitive overlay touchscreens without concern for individual arrangements of different systems employing the touchscreens.

## Description

### BACKGROUND OF THE INVENTION

### 1. Field of the Invention:

The present invention relates to a mobile terminal using a Time Division Multiple Access (TDMA) protocol. More particularly, the present invention relates to an apparatus and a method for preventing a capacitive overlay touchscreen from malfunctioning in a mobile terminal equipped with a touchscreen.

### 2. Description of the Related Art:

In general, a mobile terminal is a device that enables a user to talk or exchange data with another party while the user is in motion. Recently, additional and various useful functions are being embodied in mobile terminals in step with an era of digital convergence. There are several examples of such useful functions. In a first example, a user can use services such as Audio On Demand (AOD) and Video On Demand (VOD) through the mobile terminal. As another example, one party (i.e. the user) talks over the telephone with another party while using image calling which allows the user to view the other party's face on a display screen while conversing. As a third example, a user downloads a video game to play the downloaded video game on the mobile terminal. As shown in these examples, mobile terminals are no longer being used solely as voice call devices. As functions implemented in a mobile terminal come to be diversified, users come to find it necessary to control the mobile terminal more quickly and with greater ease of convenience. Accordingly, mobile terminals are supplied with display units that include a touchscreen. There are several types of touchscreen technology including capacitive overlay, resistive overlay, surface acoustic wave, a scheme using a transmitter, and a scheme using an infrared beam. From among these many types of touchscreens, the capacitive overlay is the one that is mainly adopted for use in mobile terminals. However, a capacitive overlay screen may malfunction due to characteristics of the capacitive overlay. In a mobile terminal equipped with a capacitive overlay screen, a high frequency is generated when a user touches the screen to signify an input of the user. In a case of a mobile terminal using TDMA, a high frequency is also generated when the mobile terminal transmits data during a transmission (TX) time slot. Because the high frequency of the data transmission may be sensed as the high frequency generated due to the touch of the user on the touchscreen, malfunction of the touchscreen may occur. Several solutions are available to prevent such a malfunction. In a first solution, GND is reinforced in an internal circuit of the mobile terminal. This is a hardware solution. In another method, a circuit design is implemented in order to minimize Radio Frequency (RF) noise generated during the TX time slot. However, since each mobile terminal has a different level of RF noise, and since the solution in hardware such that GND is reinforced in the internal circuit of the mobile terminal should be implemented on a case by case basis, it is problematic that the prior methods for preventing the touchscreens from malfunctioning cannot be fundamental schemes. Thus, because it is increasingly more popular to adopt capacitive overlay touchscreens in mobile terminals, the need for a fundamental method to prevent the touchscreens from malfunctioning grows increasingly larger.

### SUMMARY OF THE INVENTION

Accordingly, the present invention has been made to address the above problems and/or disadvantages, and it is an aspect of the present invention to provide an apparatus and a method for preventing a touchscreen from malfunctioning without a setup for special use for every mobile terminal.

In accordance with an aspect of the present invention, a method for preventing a capacitive overlay touchscreen from malfunctioning in a mobile terminal using a Time Division Multiple Access (TDMA) scheme is provided. The method includes determining if transmission of data is generated during a first time slot occupied by the mobile terminal and performing an operation corresponding to an input through the touchscreen for a time interval before the mobile terminal occupies a second time slot if data is not transmitted during the occupied first time slot.

In accordance with another aspect of the present invention, an apparatus for preventing a capacitive overlay touchscreen from malfunctioning in a mobile terminal using a Time Division Multiple Access (TDMA) scheme is provided. The apparatus includes a display unit having a touchscreen and a control unit for determining if transmission of data is generated during a first time slot occupied by the mobile terminal, and for performing an operation corresponding to an input through the touchscreen for a time interval before the mobile terminal occupies a second time slot if data is not transmitted during the occupied first time slot.

In accordance with a further aspect of the present invention, a method for preventing a capacitive overlay touchscreen from malfunctioning in a mobile terminal using a Time Division Multiple Access (TDMA) scheme is provided. The method includes determining information on time slots, ascertaining if an input through a touchscreen is generated at a point of time in a time slot during which transmission of data is accomplished from the information on the time slots if the input through the touchscreen is generated and performing an operation corresponding to the generated input through the touchscreen if the generated input through the touchscreen is not generated at the point of time in the time slot during which the transmission of the data is accomplished.

In accordance with a still further aspect of the present invention, an apparatus for preventing a capacitive overlay touchscreen from malfunctioning in a mobile terminal using a Time Division Multiple Access (TDMA) scheme is provided. The apparatus includes a display unit having a touchscreen and a control unit for determining information on time slots, for ascertaining if an input through the touchscreen is generated at a point of time in a time slot during which transmission of data is accomplished from the information on the time slots if the input through the touchscreen is generated, and for performing an operation corresponding to the generated input through the touchscreen if the generated input through the touchscreen is not generated at the point of time in the time slot during which the transmission of the data is accomplished.

### BRIEF DESCRIPTION OF THE DRAWINGS

The above and other exemplary features, aspects, and advantages of the present invention will be more apparent from the following detailed description taken in conjunction with the accompanying drawings, in which:
- FIG. 1: is a block diagram illustrating a structure of a mobile terminal according to an exemplary embodiment of the present invention;
- FIG. 2: is an example view illustrating a conceptual structure of time slots in a Global System for Mobile communications (GSM) system;
- FIG. 3: is a flowchart illustrating a procedure for performing an operation corresponding to an input through a touchscreen according to a first exemplary embodiment of the present invention; and
- FIG. 4: is a flowchart illustrating a procedure for performing an operation corresponding to an input through a touchscreen according to a second exemplary embodiment of the present invention.

Throughout the drawings, it should be noted that like reference numbers are used to depict the same or similar elements, features and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Further, in the following description of the present invention, a detailed description of known functions and configurations will be omitted for clarity and conciseness.

FIG. I is a block diagram illustrating a structure of a mobile terminal according to an exemplary embodiment of the present invention.

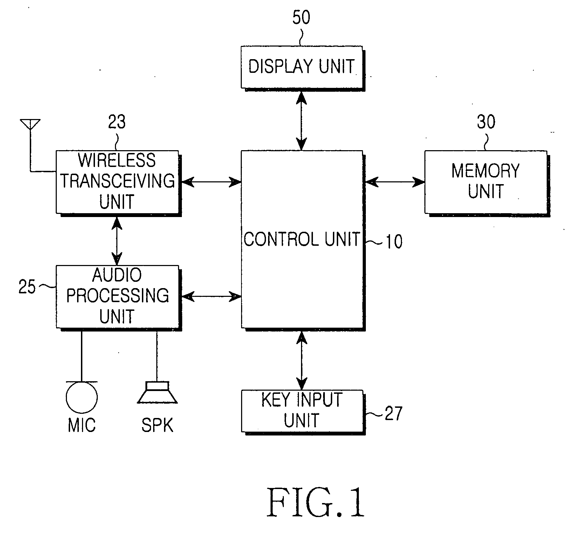

With reference to FIG. 1, a wireless transceiving unit 23 includes an RF unit (not shown) and a MOdulator/DEModulator (MODEM, not shown). The RF unit includes an RF transmitter and an RF receiver. The RF transmitter converts the frequency of a signal to be transmitted into an RF frequency thereof, and amplifies electric power of the signal having the RF frequency to be transmitted. The RF receiver converts the frequency of a received RF signal into a low frequency signal thereof for use by the mobile terminal as well as reduces the noise of the received signal. The MODEM includes a transmitter and a receiver. The transmitter encodes and modulates a signal to be transmitted. The receiver demodulates and decodes a signal that is being received. The wireless transceiving unit 23 according to an exemplary embodiment of the present invention supplies a user with a communication environment using the TDMA protocol. This type of communication protocol includes GSM as a representative scheme, can be a scheme of Wideband-Code Division Multiple Access (W-CDMA) in which the scheme of TDMA and a scheme of Code Division Multiple Access (CDMA) are combined, and can be various other kinds of communication schemes. In the following exemplary embodiments of the present invention, a description will be made using GSM as an example.

In an exemplary embodiment, an audio processing unit 25 can be constructed by a COder/DECoder (CODEC) including a data CODEC and an audio CODEC. The data CODEC processes packet data, and other data, and the audio CODEC processes an audio signal, including voice, multimedia files, and other audio signals. The audio processing unit 25 enables the audio CODEC to convert a digital audio signal received by the MODEM into an analog signal to reproduce the analog signal, for example at a speaker, or enables the audio CODEC to convert an analog audio signal generated from a microphone into a digital audio signal to deliver the digital audio signal to the MODEM. The audio processing unit 25 is equipped with the CODEC for special use, or the CODEC can be included in a control unit 10.

A key input unit 27 is equipped with keys necessary to input numerals and characters, and is equipped with function keys required to input or set various functions.

A memory unit 30 can be constructed to include a program memory and a data memory. In the program memory, programs for controlling a general operation of the mobile terminal may be stored.

A display unit 50 may be configured by Liquid Crystal Displays (LCDs) or Organic Light Emitting Diodes (OLEDs), or other appropriate display, and outputs various types of information generated from the mobile terminal. The display unit 50 according to an exemplary embodiment of the present invention is equipped with a touchscreen, and operates as an input unit, along with the key input unit 27, for controlling the mobile terminal. The touchscreen according to an exemplary embodiment of the present is a capacitive overlay type touchscreen. In the capacitive overlay type of touchscreen, both sides of a touchscreen panel are coated with a transparent special metal which. In operation of the touchscreen, the special metal conducts a continuous electrical current and a high frequency spreads on the surface of the panel with application of a voltage to each corner of the panel. When a user touches the touchscreen as a means of an input, an altered waveform of the high frequency is caused by the touch of the user's bare finger to the panel and the altered waveform is analyzed. As a result of the analysis, a spot on the panel which the user's bare finger has touched can be detected.

The control unit 10 controls/switches an overall operation or a driving mode of the mobile terminal. The control unit 10 according to an exemplary embodiment of the present invention determines what time slot is occupied among eight time slots by evaluating information on the time slots, and ascertains if the occupied time slot is being spent in transmitting (Tx) data or in receiving (Rx) data.

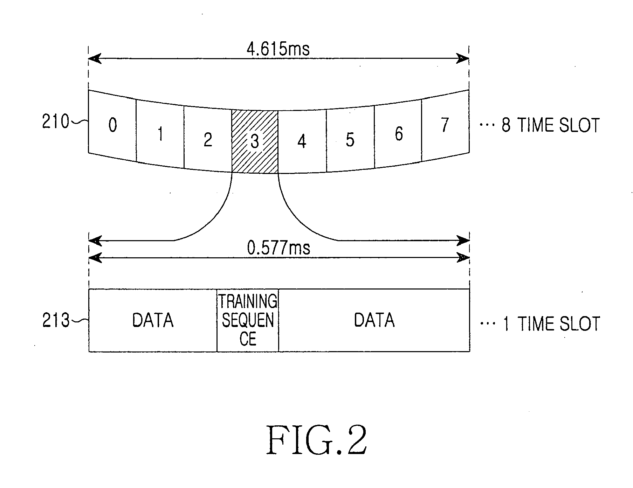

FIG. 2 is an example view illustrating a conceptual structure of time slots in a Global System for Mobile communications (GSM) system.

The GSM is a representative communication scheme using TDMA wherein eight time slots configure each radio channel. The user of a mobile terminal occupies any of the eight time slots, and transmits (Tx) or receives (Rx) data when it is a relevant time of the time slot that is currently being occupied or is to be occupied by the user. With reference to FIG. 2, it takes 4.615 milliseconds to pass all eight time slots 210 of '0' to '7,' and it takes 0.577 milliseconds to pass each time slot 213. Thus, according to exemplary embodiments of the present invention, the control unit 10 determines if the time slot that is currently being occupied or is to be occupied is spent in transmitting/receiving data, confirms the necessary time to pass the time slot(s) (e.g., 0.577 milliseconds per each time slot, and 4.615 milliseconds for all time slots) based on the information on the time slots. Furthermore, the control unit 10 determines which time slot from among the eight time slots is currently being occupied or is to be occupied.

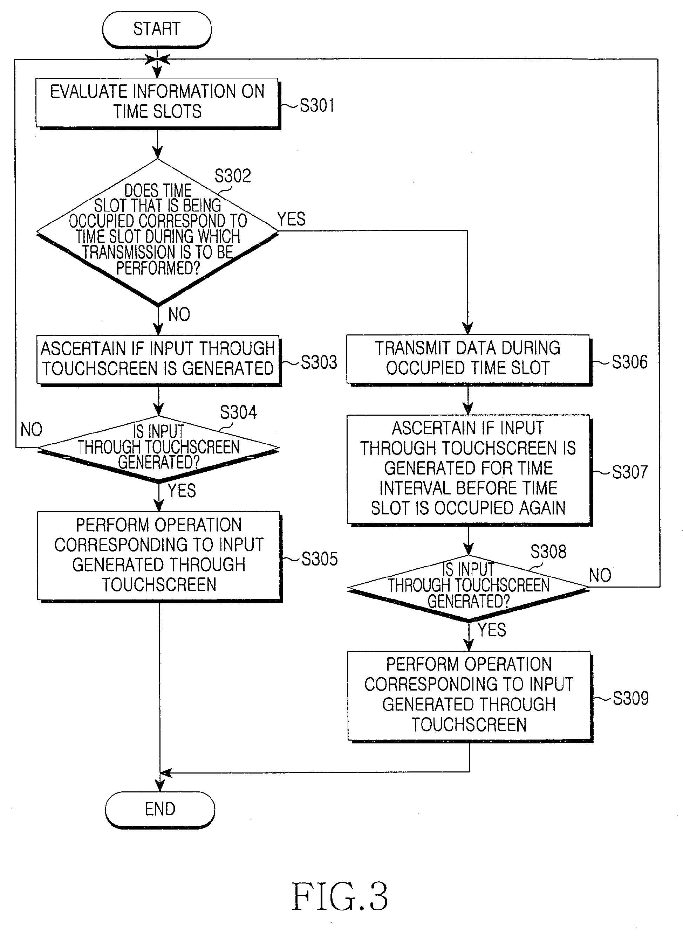

FIG. 3 is a flowchart illustrating a procedure for performing an operation corresponding to an input through a touchscreen according to a first exemplary embodiment of the present invention.

In step 301, the control unit 10 evaluates information on time slots. Using the evaluated information, in step 302 the control unit 10 determines if a time slot that is being occupied corresponds to a time slot during which transmission is to be performed.

More specifically with regard to step 302, after determining which time slot is occupied from among the eight time slots by using the evaluated information on the time slots, the control unit 10 ascertains if the time slot that is occupied is used for transmitting or receiving data to/from a base station. Through the above process, if it is determined in step 302 that the time slot that is being occupied corresponds to a time slot during which transmission of data is to be performed, the control unit 10 proceeds to step S306. On the contrary, if it is determined in step 302 that the time slot that is being occupied does not correspond to a time slot during which transmission of data is to be performed, the control unit 10 proceeds to step S303.

If it is determined that the time slot that is being occupied does not correspond to a time slot during which transmission of data is to be performed, the control unit proceeds to step S303. As a result of the evaluation and the determination in steps in S301 and S302, the control unit 10 ascertains if an input through the touchscreen is generated in step S303, determines if the input through the touchscreen is generated in step S304, and controls performance of an operation corresponding to the input generated through the touchscreen in step S305.

Contrary to the prior art, in which a determination is made as to touchscreen input at predetermined periodic time intervals, the control unit 10 according to the first exemplary embodiment of the present invention starts to ascertain if input through the touchscreen is generated only when the time slot does not correspond to a time slot during which transmission of data is performed. In this manner, the control unit 10 starts to ascertain if input through the touchscreen is generated only when the time slot that is being occupied does not correspond to a time slot during which transmission of data is performed. Accordingly, the control unit 10 of the first exemplary embodiment can prevent malfunction of the touchscreen due to RF noise generated during transmission of data. Thereafter, the control unit 10 confirms if an input through the touchscreen is generated, and performs an operation corresponding to the input generated through the touchscreen.

If it is determined in step S302 that the time slot that is being occupied is assigned to a time slot during which transmission of data is performed, the control unit proceeds to step S306. In step S306, the control unit 10 transmits the data during the occupied time slot. In step 307, the controller ascertains if an input through the touchscreen is generated for a time interval before a time slot is occupied again.

As an example, where transmission or reception of data is implemented during a time slot in a TDMA type communication system, a prescribed time interval must elapse before a time slot is occupied again. By using this characteristic, the control unit 10 according to the first exemplary embodiment of the present invention can prevent the mobile terminal from malfunctioning. In an example with reference to FIG. 2, data is transmitted during time slot No. 3 from among the eight time slots Nos. 0 through 7. Accordingly, the control unit 10 can ascertain, for a time interval before a time slot is occupied again, if an input through the touchscreen is generated. In a case when a time slot that is occupied again is the same as the time slot of No. 3 that had been previously occupied, the control unit 10 ascertains if an input through the touchscreen is generated for a time interval of approximately 4.039 ms (0.577 ms/slot x 7 slots). However, in a case where a time slot that is occupied again corresponds to a different time slot, for example time slot No. '0', the control unit 10 ascertains if an input through the touchscreen is generated for a time interval of approximately 2.308 ms (0.577 ms/slot x 4 slots).

After that, the control unit 10 determines if an input through the touchscreen is generated in step S308, and controls performance of an operation corresponding to the input generated through the touchscreen in step S309.

As described above, the control unit 10 ascertains if an input is generated through the touchscreen for a determined time interval through steps S306 and S307, and controls performance of an operation corresponding to the input generated through the touchscreen. Therefore, malfunction of the touchscreen operation can be prevented.

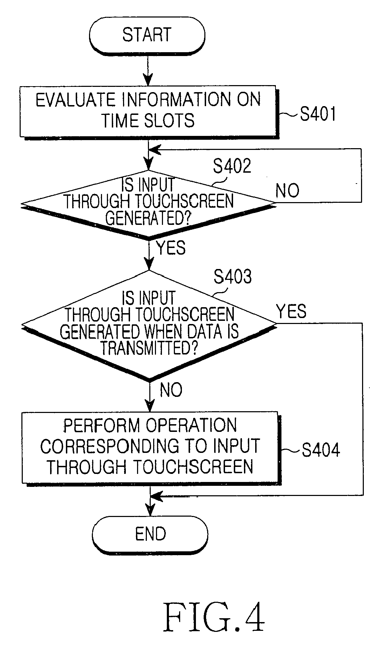

FIG. 4 is a flowchart illustrating a procedure for performing an operation corresponding to an input through a touchscreen according to a second exemplary embodiment of the present invention.

Contrary to the first exemplary embodiment in which the control unit 10 determines if input through the touchscreen is generated only when a time slot is not used for transmitting data, in a second exemplary embodiment of the present invention an input through the touchscreen is always allowed, and an operation corresponding to the generated input through the touchscreen is performed. The second exemplary embodiment will now be described with reference to FIG. 4.

After evaluating information on time slots in step S401, the control unit 10 determines if an input through the touchscreen is generated in step S402.

Similar to step S301 as shown in FIG. 3, in step S401 the control unit 10 acquires diverse information regarding the time slots as needed to determine which time slots are transmitting or receiving data, and to determine other necessary parameters. Then, in step S402 the control unit 10 ascertains if an input through the touchscreen is generated. In the present exemplary embodiment, the control unit 10 always checks if input through the touchscreen is generated.

If it is determined in step S402 that input through the touchscreen is generated, the control unit 10 determines, in step S403, a state of the mobile terminal when the input through the touchscreen is generated. For example, the control unit 10 determines in step S403 if data is being transmitted when the input through the touchscreen is generated.

In the mobile terminal of the exemplary embodiment, a prescribed high frequency is generated in at least two cases. The first case is when an input through the touchscreen is generated due to a touch of a user to the touchscreen panel. The second is when a time slot occupied by the mobile terminal is spent in transmitting data. Hence, according to an exemplary embodiment, if the control unit 10 detects that a high frequency corresponding to input through the touchscreen is generated, the control unit 10 confirms the time that the input through the touchscreen is detected (i.e. the prescribed high frequency corresponding to the input through the touchscreen is detected). Namely, the control unit 10 confirms if the generated input through the touchscreen is generated for a time interval in which data is transmitted. Through this confirmation process, the control unit 10 can determine if the generated high frequency is due to input through the touchscreen or due to a process of the transmission of data.

If it is determined in step S403 that the input generated through the touchscreen corresponds to an input through the touchscreen caused by the touch of a user, the control unit 10 controls performance of an operation corresponding to the input through the touchscreen in step S404.

That is, if it is determined in step S403 that the input generated through the touchscreen, i.e. a detected prescribed high frequency, is generated through the touchscreen caused by the touch of a user, the control unit 10 controls performance of an operation of the mobile terminal corresponding to the input through the touchscreen in step S404. Alternatively, if it is determined that the detected high frequency signal is not generated by the touch of a user through the touchscreen, that is if it is determined that the high frequency signal is detected during the transmission of data, the control unit 10 does not control performance of an operation and a malfunction of the touchscreen is avoided.

Certain merits and effects of exemplary embodiments of the present invention, for example those configured to operate as above, will be described as follows.

As described above and according to the present invention, preventing a touchscreen from malfunctioning can be fulfilled without a setup for special use for every mobile terminal. The malfunction of the touchscreen can be prevented in a fundamental scheme.

While the invention has been shown and described with reference to exemplary embodiments thereof, it will be understood by those skilled in the art that various changes in form and details may be made therein without departing from the spirit and scope of the invention. Therefore, the spirit and scope of the present invention must be defined not by described embodiments thereof but by the appended claims and their equivalents.

## Claims

1. A method for preventing a capacitive overlay touchscreen from malfunctioning based on a Time Division Multiple Access (TDMA) scheme, the method comprising:
evaluating information on a plurality of time slots;
determining if a occupied time slot of the plurality of time slots is for transmitting (Tx) through the information; and
performing an operation corresponding to an input through the touchscreen until reoccupying a time slot of the plurality of time slots when the occupied time slot is not for transmitting (Tx).

2. The method as claimed in claim 1, wherein the method is performed by a mobile terminal comprises the touchscreen.

3. The method as claimed in claim 1, further comprising preventing the operation corresponding to the input when the occupied time slot is for transmitting (Tx).

4. The method as claimed in claim 1, further comprising:
transmitting data during the occupied time slot if the occupied time slot is for transmitting (Tx);
determining if an input through the touchscreen is generated after the transmitting of the data; and
performing the operation corresponding to the generated input through the touchscreen after the transmitting of the data until reoccupying a time slot of the plurality of time slots.

5. An apparatus for preventing a capacitive overlay touchscreen from malfunctioning based on a Time Division Multiple Access (TDMA) scheme, the apparatus comprising:
a display unit comprising the capacitive overlay touchscreen; and
a control unit for evaluating information on a plurality of time slots, and for determining if a occupied time slot of the plurality of time slots is for transmitting (Tx) through the information, and for performing an operation corresponding to an input through the touchscreen until reoccupying a time slot of the plurality of time slots when the occupied time slot is not for transmitting (Tx).

6. The apparatus as claimed in claim 5, wherein the apparatus is a mobile terminal.

7. The apparatus as claimed in claim 5, wherein the control unit prevents the operation corresponding to the input when the occupied time slot is for transmitting (Tx).

8. The apparatus as claimed in claim 5, wherein the control unit determines if an input through the touchscreen is generated after transmitting of a data during the occupied time slot when the occupied time slot is for transmitting (Tx), and performs an operation corresponding to the generated input after the transmitting until reoccupying a time slot of the plurality of time slots.

9. A method for preventing a capacitive overlay touchscreen from malfunctioning based on a Time Division Multiple Access (TDVIA) scheme, the method comprising:
determining if an input through the touchscreen is generated, and evaluating information on a plurality of time slots when the input is generated;
confirming if the input is generated during a occupied time slot of the plurality of time slots through the information; and
performing an operation corresponding to the input until reoccupying a time slot of the plurality of time slots when the input is not generated during the occupied time slot.

10. The method as claimed in claim 9, wherein the method is performed by a mobile terminal comprises the touchscreen.

11. The method as claimed in claim 9, further comprising determining if the occupied time slot is for transmitting (Tx) through the information when the input is generated during the occupied time slot.

12. The method as claimed in claim 11, further comprising performing the operation corresponding to the input until reoccupying a time slot of the plurality of time slots when the occupied time slot is not for transmitting (Tx).

13. The method as claimed in claim 11, further comprising preventing the operation corresponding to the generated input when the occupied time slot is for transmitting (Tx).

14. An apparatus for preventing a capacitive overlay touchscreen from malfunctioning based on a Time Division Multiple Access (TDMA) scheme, the apparatus comprising:
a display unit comprising the touchscreen; and
a control unit for determining if an input through the touchscreen is generated, and evaluating information on a plurality of time slots when the input is generated, and for confirming if the input is generated during a occupied time slot of the plurality of time slots through the information, and for performing an operation corresponding to the input until reoccupying a time slot of the plurality of time slots when the input is not generated during the occupied time slot.

15. The apparatus as claimed in claim 14, wherein the apparatus is a mobile terminal.

16. The apparatus as claimed in claim 14, wherein the control unit determines if the occupied time slot is for transmitting (Tx) through the information when the input is generated during the occupied time slot.

17. The apparatus as claimed in claim 16, wherein the control unit performs the operation corresponding to the input until reoccupying the time slot of the plurality of time slots when the occupied time slot is not for transmitting (Tx).

18. The apparatus as claimed in claim 16, wherein the control unit prevents the operation corresponding to the generated input when the occupied time slot is for transmitting (Tx).
